# EUROPEAN PATENT APPLICATION

(11) **EP 4 366 120 A1**
(43) Date of publication of application: **08.05.2024**
(21) Application number: 22942093.0
(22) Date of filing: 19.05.2022
(51) Int. Cl.: H02J 7/00

(54) **BATTERY CHARGING METHOD, AND CHARGING APPARATUS**

(71) Applicant: Contemporary Amperex Technology Co., Limited, Ningde, Fujian 352100 (CN)
(72) Inventor: FU, Chenghua, Ningde, Fujian 352100 (CN); OUYANG, Shaocong, Ningde, Fujian 352100 (CN); XU, Baoyun, Ningde, Fujian 352100 (CN); HUANG, Xiaojian, Ningde, Fujian 352100 (CN); YE, Yonghuang, Ningde, Fujian 352100 (CN); MA, Wenjian, Ningde, Fujian 352100 (CN)
(74) Representative: Ziebig Hengelhaupt Intellectual Property Attorneys Patentanwaltskanzlei PartGmbB
(86) International application number: PCT/CN2022/093938
(87) International publication number: WO 2023/221053

(57) **Abstract**

This application provides a charge method and charge apparatus for battery, able to effectively charge the battery in low-temperature environments. The charge method includes: obtaining temperature of a battery; when the temperature of the battery is lower than a preset temperature threshold, determining to use a first charge current to charge the battery until the battery meets a preset condition, and then determining to use a second charge current to charge the battery, where the first charge current is used for heating the battery during charging, and the first charge current is greater than the second charge current.

## Description

### TECHNICAL FIELD

This application relates to the field of battery technologies, and in particular, to a charge method and charge apparatus for battery.

### BACKGROUND

With the advantages such as high energy density, support of cyclic charging, safety, and environment friendliness, traction batteries are widely used in new energy vehicles, consumer electronics, energy storage systems, and other fields.

However, the use of traction batteries is limited in low-temperature environments. For example, it is more difficult to charge traction batteries in low-temperature environments. Therefore, how batteries are effectively charged in low-temperature environments has become a problem to be resolved urgently.

### SUMMARY

This application provides a charge method and charge apparatus for battery, able to effectively charge the battery in a low-temperature environment.

According to a first aspect, a charge method for battery is provided. The charge method includes: obtaining temperature of a battery; and when the temperature of the battery is lower than a preset temperature threshold, determining to use a first charge current to charge the battery until the battery meets a preset condition, and then determining to use a second charge current to charge the battery, where the first charge current is used for heating the battery during charging, and the first charge current is greater than the second charge current.

In low-temperature environments, batteries have poor charge performance, resulting in a longer charge time. In embodiments of this application, when the temperature of the battery is lower than the preset temperature threshold, the relatively large first charge current can be used to charge the battery, so as to heat the battery during charging, and after the temperature of the battery rises, the battery continues to be charged using the relatively small second charge current. In this way, the overall charge time can be shortened.

In an implementation, the determining, when the temperature of the battery is lower than a preset temperature threshold, to use a first charge current to charge the battery includes: when the temperature of the battery is lower than the temperature threshold and that a SOC of the battery is less than a preset SOC threshold, determining to use the first charge current to charge the battery.

In consideration that when the first charge current is used to charge the battery, a high SOC is likely to cause lithium precipitation of the battery. In order to ensure the safety of the battery, in this embodiment, when the temperature of the battery is lower than the temperature threshold and the SOC of the battery is greater than the SOC threshold, it is determined that the first charge current is used to charge the battery so as to heat the battery during charging until the battery meets the preset condition, and then it is determined that the battery continues to be charged using the second charge current.

In an implementation, the preset condition includes that the temperature of the battery is higher than or equal to the temperature threshold and/or that the SOC of the battery is greater than or equal to the SOC threshold.

When the first charge current is used to charge the battery, the temperature and SOC of the battery both increase gradually. When the temperature of the battery rises to the temperature threshold, good enough charge performance can be obtained without the need to continue heating the battery, and the battery can continue to be charged using the second charge current. When the SOC of the battery reaches the SOC threshold, in order to reduce the risk of lithium precipitation of the battery caused by large-current charge, the battery can continue to be charged using the second charge current.

In an implementation, the first charge current is a pulse current and the second charge current is a direct current. With the battery charged using the pulse current, heat produced by polarization of its cell can be effectively used to increase the temperature of the battery. With the battery charged using the direct current, a higher energy utilization can be obtained.

In an implementation, the first charge current includes only the pulse current for charging the battery, so as to reduce the complexity of controlling the current.

In an implementation, the first charge current includes the pulse current for alternately charging and discharging the battery, so as to reduce the risk of lithium precipitation of the battery caused by large-current charge.

In an implementation, a duty cycle of the pulse current is greater than or equal to 0.01 and less than or equal to 50.

In an implementation, the peak value of the first charge current is greater than or equal to 0.2C and less than or equal to 10C.

In an implementation, the charge method is executed by a battery management system BMS of the battery.

According to a second aspect, a charge apparatus is provided. The charge apparatus includes: a signal acquisition unit configured to obtain temperature of a battery; and a processing unit configured to: when the temperature of the battery is lower than a preset temperature threshold, determine to use a first charge current to charge the battery, the first charge current being used for heating the battery during charging of the battery; and when the temperature of the battery reaches the temperature threshold, determine to use a second charge current to charge the battery, the first charge current being greater than the second charge current.

In an implementation, the processing unit is specifically configured to: when the temperature of the battery is lower than the temperature threshold and a SOC of the battery is less than a preset SOC threshold, determine to use the first charge current to charge the battery.

In an implementation, the preset condition includes that the temperature of the battery is higher than or equal to the temperature threshold and/or that the SOC of the battery is greater than or equal to the SOC threshold.

In an implementation, the first charge current is a pulse current and the second charge current is a direct current.

In an implementation, the first charge current includes only the pulse current for charging the battery.

In an implementation, the first charge current includes the pulse current for alternately charging and discharging the battery.

In an implementation, a duty cycle of the pulse current is greater than or equal to 0.01 and less than or equal to 50.

In an implementation, the peak value of the first charge current is greater than or equal to 0.2C and less than or equal to 10C.

In an implementation, the charge apparatus is a BMS of the battery.

According to a third aspect, a charge apparatus is provided, including a memory and a processor, where the memory stores computer instructions, and the processor invokes the computer instructions to cause the charge apparatus to implement the charge method according to the first aspect or any one of the implementations of the first aspect.

According to a fourth aspect, a computer-readable storage medium is provided, characterized by being configured to store a computer program, where when the computer program is executed by a computing device, the computing device is caused to implement the charge method according to the first aspect or any one of the implementations of the first aspect.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic flowchart of a charge method for battery according to an embodiment of this application;
FIG. 2 is a schematic diagram of a waveform of a first charge current according to an embodiment of this application;
FIG. 3 is a schematic diagram of a waveform of a first charge current according to another embodiment of this application;
FIG. 4 is a schematic diagram of a relationship between SOC and voltage of a battery during charging;
FIG. 5 is a flowchart of a possible specific implementation of the charge method shown in FIG. 1;
FIG. 6 is a schematic block diagram of a charge apparatus according to an embodiment of this application; and
FIG. 7 is a schematic block diagram of a charge apparatus according to another embodiment of this application.

### DESCRIPTION OF EMBODIMENTS

The following further describes implementations of this application in detail with reference to the accompanying drawings and embodiments. The following detailed description of embodiments and the accompanying drawings are intended to illustrate the principle of this application rather than to limit the scope of this application, meaning this application is not limited to the embodiments as described.

In the descriptions of this application, it should be noted that, unless otherwise stated, "a plurality of" means at least two; and the orientations or positional relationships indicated by the terms "upper", "lower", "left", "right", "inside", "outside", and the like are merely for ease and brevity of description of this application rather than indicating or implying that the apparatuses or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not strictly vertical, but within the allowable range of error. "Parallel" is not strictly parallel, but within the allowable range of error.

The orientation terms appearing in the following description all are directions shown in the figures, and do not limit the specific structure of this application. In the descriptions of this application, it should be further noted that unless otherwise specified and defined explicitly, the terms "installation", "link", and "connection" should be understood in their general senses. For example, the terms may be a fixed connection, a detachable connection, or an integrated connection, or may be a direct connection, or an indirect connection through an intermediate medium. Persons of ordinary skill in the art can understand specific meanings of these terms in this application as appropriate to specific situations.

For a battery, energy storage and discharge are implemented by virtue of migration of lithium ions Li⁺ between positive and negative electrodes of the battery. However, the migration of Li⁺ between the positive and negative electrodes is greatly affected by temperature, especially in low-temperature environments. Due to factors such as the deterioration of kinetic conditions for the positive and negative electrodes of the battery, and increase in viscosity and decrease in conductivity of the electrolyte, performance of a lithium-ion battery would decline sharply, prolonging the charge time of the lithium-ion battery in low-temperature environments.

To avoid the problem of long charge time in winter, this application proposes that when at a low temperature, the battery can be first charged using a large current so that the battery is heated while being charged, thus raising the temperature of the battery, and after that the battery is charged using a normal current.

The battery in the embodiments of this application may be a traction battery, and the traction battery may be, for example, a lithium-ion battery, a lithium metal battery, a lead-acid battery, a nickel-cadmium battery, a nickel-metal hydride battery, a lithium-sulfur battery, a lithium-air battery, or a sodium-ion battery. In terms of scale, the traction battery may be a battery monomer which is referred to as a cell, or it may be a battery module or a battery pack. This is not limited herein. In terms of application scenarios, the traction battery can be used in motive apparatuses such as automobiles and ships, for example, used in a motor vehicle to power a motor of the motor vehicle as a power source for the electric vehicle. The traction battery can also power other electric devices in the electric vehicle, for example, powering a vehicular air conditioner, a vehicular player, and the like.

For ease of description, the following describes the solutions of this application by using an example in which the traction battery is used in a new energy vehicle (that is, a motor vehicle, or referred to as an electric vehicle).

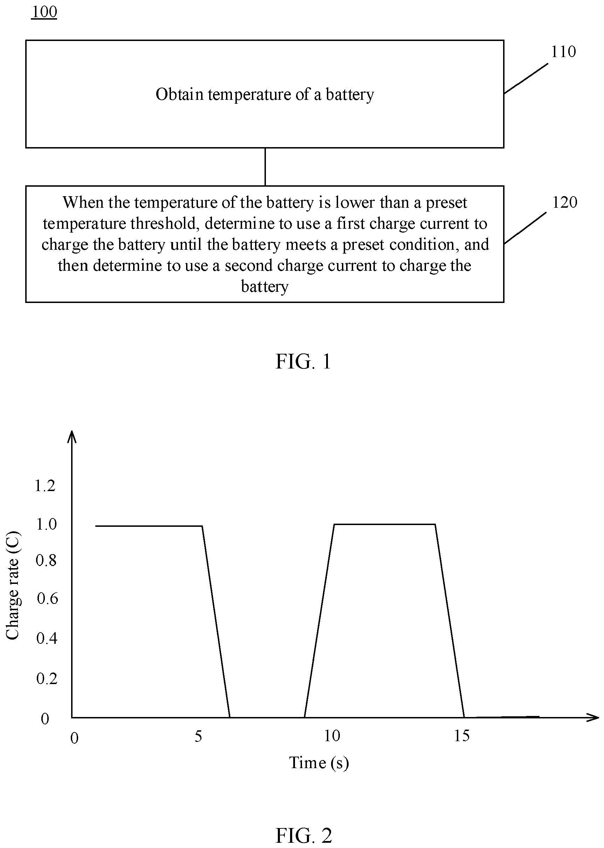

FIG. 1 is a schematic flowchart of a charge method 100 for battery according to an embodiment of this application. The method 100 shown in FIG. 1 can be executed, for example, by a battery management system (Battery Management System, BMS) or other control modules of the battery. As shown in FIG. 1, the method 100 includes some or all of the following steps.

Step 110: Obtain temperature of a battery.

Step 120: When the temperature of the battery is lower than a preset temperature threshold, determine to use a first charge current to charge the battery until the battery meets a preset condition, and then determine to use a second charge current to charge the battery.

The first charge current is used for heating the battery during charging, and the first charge current is greater than the second charge current.

In low-temperature environments, batteries have poor charge performance, resulting in a longer charge time. In the embodiments of this application, when the temperature of the battery is lower than the preset temperature threshold, the relatively large first charge current can be used to charge the battery, so as to heat the battery during charging, and after the temperature of the battery rises, the battery continues to be charged using the relatively small second charge current. In this way, the overall charge time can be shortened.

For example, the first charge current can be a pulse current and the second charge current can be a direct current. The first charge current is greater than the second charge current, to be specific, the pulse peak value of the first charge current is greater than that of the second charge current. With the battery charged using the pulse current, heat produced by polarization of its cell can be effectively used to increase the temperature of the battery. With the battery charged using the direct current, a higher energy utilization can be obtained.

It should be understood that the first charge current can be far greater than the second charge current. For example, the second charge current is typically 0.05C. In an implementation, the peak value of the first charge current is greater than or equal to 0.2C and less than or equal to 10C. Preferably, the peak value of the first charge current is greater than or equal to 1C and less than or equal to 5C. It can be understood that when the second charge current is used to charge the battery, little heat is produced, which is negligible. When the first charge current is used to charge the battery, the temperature of the battery can be increased quickly during charging at the large pulse current. In an implementation, the duty cycle of the pulse current is greater than or equal to 0.01 and less than or equal to 50. Preferably, the duty cycle of the pulse current is greater than or equal to 0.25 and less than or equal to 30.

In this embodiment of this application, when the first charge current with the foregoing parameter values is used to charge the battery, the temperature of the battery rises from -20°C to 15°C in 30 min of charge, implementing a quick temperature rise of the battery.

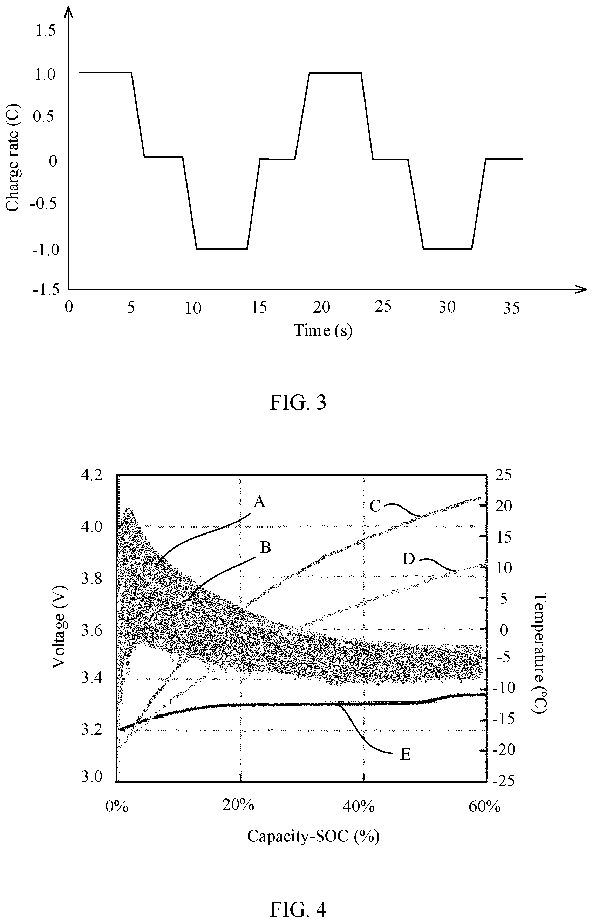

FIGs. 2 and 3 illustrate two possible waveforms of a first charge current. In an implementation, as shown in FIG. 2, the first charge current includes only the pulse current for charging the battery, so as to reduce the complexity of controlling the current. In another implementation, as shown in FIG. 3, the first charge current can include the pulse current for alternately charging and discharging the battery, so as to reduce the risk of lithium precipitation of the battery caused during charging at a large pulse current.

As shown in FIG. 2, the horizontal coordinate represents charge time, and the vertical coordinate represents charge rate of the first charge current. In each charge cycle, the battery is charged using a large pulse current for 5s and then rests for 5s. The waveform of the first charge current includes only the pulse for charging the battery.

As shown in FIG. 3, the horizontal coordinate represents charge time, and the vertical coordinate represents charge rate of the first charge current. In each charge cycle, the battery is charged using a large pulse current for 5s, then rests for 5s, subsequently is discharged for 5s, and then rests for 5s. The waveform of the first charge current includes the pulse for alternately charging and discharging the battery.

FIG. 4 illustrates a relationship between SOC and voltage of a battery during charging in different charge manners. Curve A represents changing of the voltage with the SOC when the first charge current is used to charge the battery, and curve B represents the changing of the voltage with the SOC when the second charge current is used to charge the battery. The second charge current is a direct current, and the first charge current is a pulse current equivalent to the direct current. In FIG. 4, an example is used in which the second charge current is 0.5C and a pulse peak value of the first charge current is 2C. The first charge current is a pulse current, and a corresponding voltage of the battery fluctuates. Therefore, when density of voltage sampling points is large enough, a result shown in curve A is presented. Curve E may be a SOC-OCV curve in a polarization-free case, which is drawn under a condition that polarization is eliminated after 2h resting every time 5% of power is charged with a current of 0.05C, that is, a static SOC-OCV curve, or referred to as a lithiation potential curve. Curve C and curve D respectively represent temperature risings of the battery when the first charge current is used to charge the battery and when the second charge current is used to charge the battery, respectively.

As shown in FIG. 4, an area of a region surrounded by curve A, curve E and the vertical coordinate axis represents power Q1 of charge of the battery with the first charge current, and an area of a region surrounded by curve B, curve E and the vertical coordinate axis represents power Q2 of charge of the battery with the second charge current. It can be seen from FIG. 4 that Q1>Q2, where a difference between Q1 and Q2, that is, power Q1-Q2 is used for heating the battery. Therefore, it can be seen from curve C and curve D that when the first charge current, which is a large pulse current, is used to charge the battery, the temperature rises quickly, such that the battery is heated quickly. It can be learned that when the large pulse current is used to charge the battery, higher battery heating efficiency is achieved, but energy utilization is low, only part of energy is used for charging the battery, and another part of energy is used for heat production of the battery.

Therefore, when the temperature of the battery is lower than the preset temperature threshold, the relatively large-rate pulse current can be used to charge the battery so as to heat the battery during charging, and after the temperature of the battery rises, the battery continues to be charged using a normal direct current, such that energy utilization is ensured during charging of the battery. As compared with the method of using the direct current to charge the battery all the time, the use of the large pulse current for quickly heating the battery improves the charge performance of the battery, and then the direct current is used for charging the battery, shortening the overall charge time, thus improving the user experience.

In an implementation, in step 120, the determining, when the temperature of the battery is lower than a preset temperature threshold, to use a first charge current to charge the battery includes: when the temperature of the battery is lower than the temperature threshold and a state of charge (State of Charge, SOC) of the battery is less than a preset SOC threshold, determining to use the first charge current to charge the battery.

In consideration that when the first charge current is used to charge the battery, a high SOC is likely to cause lithium precipitation of the battery. In order to ensure the safety of the battery, the foregoing SOC threshold can be set. When the temperature of the battery is lower than the temperature threshold and the SOC of the battery is greater than the SOC threshold, it is determined that the first charge current is used to charge the battery so as to heat the battery during charging until the battery meets the preset condition, and then it is determined that the battery continues to be charged using the second charge current.

In an implementation, the preset condition includes that the temperature of the battery is higher than or equal to the temperature threshold and/or that the SOC of the battery is greater than or equal to the SOC threshold.

When the first charge current is used to charge the battery, the temperature and SOC of the battery both increase gradually. When the temperature of the battery rises to the temperature threshold, good enough charge performance can be obtained without the need to continue heating the battery, and the battery can continue to be charged using the second charge current. When the SOC of the battery reaches the SOC threshold, in order to reduce the risk of lithium precipitation of the battery caused by large-current charge, the battery can continue to be charged using the second charge current. In other words, during charging of the battery at the first charge current, when the temperature of the battery reaches the temperature threshold or the SOC reaches the SOC threshold, the use of the first charge current can be stopped, and then the battery continues to be charged using the second charge current.

Certainly, if the temperature of the battery obtained in step 110 is higher than the temperature threshold, the battery may not be heated, and is directly charged using the second charge current. Alternatively, the SOC of the battery may be obtained before charging. If the SOC is greater than the SOC threshold, in order to ensure the safety of the battery, the battery may not be heated, and is directly charged using the second charge current.

In other words, when the battery is in a low-temperature environment and has a low SOC, a heating procedure can be started. To be specific, the first charge current is used to charge the battery, so as to increase the temperature of the battery, thereby shortening the charge time of the battery. When the battery has an appropriate temperature or a high SOC, it is unnecessary to start a heating procedure or a started heating procedure should be ended, and the second charge current is used to charge the battery.

In the embodiments of this application, the temperature threshold and the SOC threshold can be set and adjusted depending on actual application situations. For example, the temperature threshold may be in the range of -10°C to 10°C or -5°C to 5°C, for example, being 0°C. For another example, the SOC threshold may be in the range of 50% to 70%, for example, being 60%.

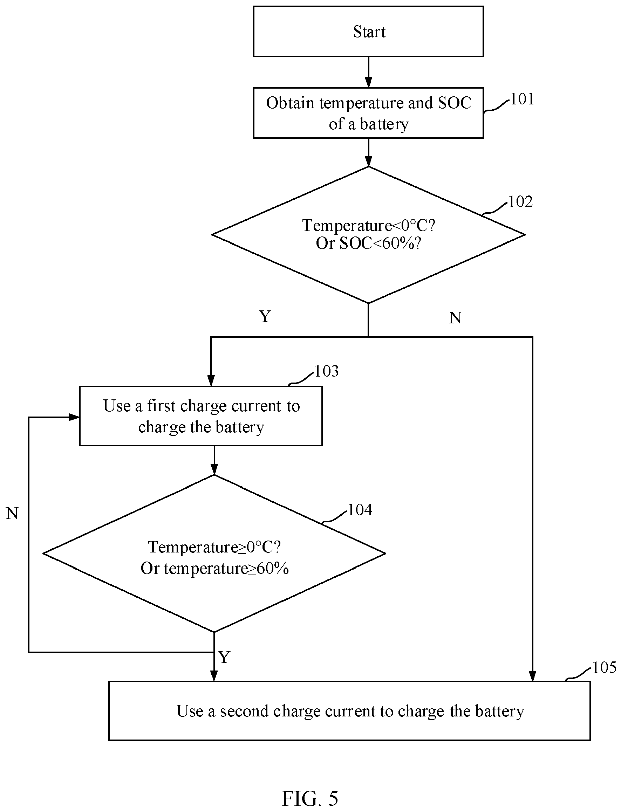

For example, FIG. 5 is a flowchart of a possible specific implementation of the method 100 shown in FIG. 1. As shown in FIG. 5, assuming that the temperature threshold is 0°C and the SOC threshold is 60%, the method can be executed by a BMS and specifically includes the following steps.

Step 101: Obtain temperature and SOC of a battery.

Step 102: Determine whether or not the temperature of the battery is lower than 0°C and whether or not the SOC of the battery is less than 60%.

If it is determined in step 102 that the temperature of the battery is lower than 0°C and the SOC of the battery is less than 60%, steps 103 to 105 are performed.

Step 103: Determine to use a first charge current to charge the battery.

For example, the large pulse current can be used to alternately charge and discharge the battery, so as to heat the battery.

Step 104: Determine whether or not the temperature of the battery is higher than or equal to 0°C and whether or not the SOC of the battery is greater than or equal to 60%.

During charging of the battery at the first charge current, the temperature and SOC of the battery need to be simultaneously monitored. For example, the temperature and SOC of the battery are measured according to a specified period. In addition, whether or not the temperature of the battery is higher than or equal to 0°C and whether or not the SOC of the battery is greater than or equal to 60% are determined.

Step 105 is performed if the measured temperature of the battery reaches 0°C or the SOC exceeds 60%.

Step 105: Use a second charge current to charge the battery.

If it is determined in step 102 that the temperature of the battery is higher than or equal to 0°C or the SOC of the battery is greater than or equal to 60%, step 105 is performed directly without steps 103 and 104. For example, the battery does not need to be heated and is directly charged using a normal direct current.

After the battery is fully charged, the charge process is ended.

It can be seen that with use of the charge policy in the embodiments of this application, in the low-temperature environment, before the second charge current is used to charge the battery, as the first charge current is used first to charge the battery to heat the battery, the battery can reach the normal temperature as soon as possible to restore the charging performance thereof. This shortens the subsequent charge time of the battery with the second charge current, thus shortening the overall charge time of the battery.

In the embodiments of this application, after the BMS determines an appropriate charge policy based on information such as the temperature and/or SOC of the battery, a control signal can be output to a corresponding charge/discharge circuit, so that the battery can be charged with the large pulse current and direct current via the charge/discharge circuit.

In order to further shorten the charge time of the battery, optionally, a negative electrode of the battery may be made of graphite with a small particle size, and/or an electrolyte with a high conductivity is used, thus improving the charge capability of the battery. For example, a particle size range of the graphite is 3 um to 20 um, preferably 6 um to 16 um. For another example, a conductivity range of the electrolyte is 8 s/m to 24 s/m, preferably 6 s/m to 18 s/m.

As shown in FIG. 5, this application further provides a charge apparatus 200. The charge apparatus 200 may be, for example, a BMS of a battery. As shown in FIG. 5, the charge apparatus 200 includes a signal acquisition unit 210 and a processing unit 220. The signal acquisition unit 210 is configured to obtain temperature of a battery. The processing unit 220 is configured to: when the temperature of the battery is lower than a preset temperature threshold, determine to use a first charge current to charge the battery, the first charge current being used for heating the battery during charging of the battery; and when the temperature of the battery reaches the temperature threshold, determine to use a second charge current to charge the battery, the first charge current being greater than the second charge current.

In an implementation, the processing unit 520 is specifically configured to: when the temperature of the battery is lower than the temperature threshold and a SOC of the battery is less than a preset SOC threshold, determine to use the first charge current to charge the battery.

In an implementation, the preset condition includes that the temperature of the battery is higher than or equal to the temperature threshold and/or that the SOC of the battery is greater than or equal to the SOC threshold.

In an implementation, the first charge current is a pulse current and the second charge current is a direct current.

In an implementation, the first charge current includes only the pulse current for charging the battery.

In an implementation, the first charge current includes the pulse current for alternately charging and discharging the battery.

In an implementation, a duty cycle of the pulse current is greater than or equal to 0.01 and less than or equal to 50.

In an implementation, the peak value of the first charge current is greater than or equal to 0.2C and less than or equal to 10C.

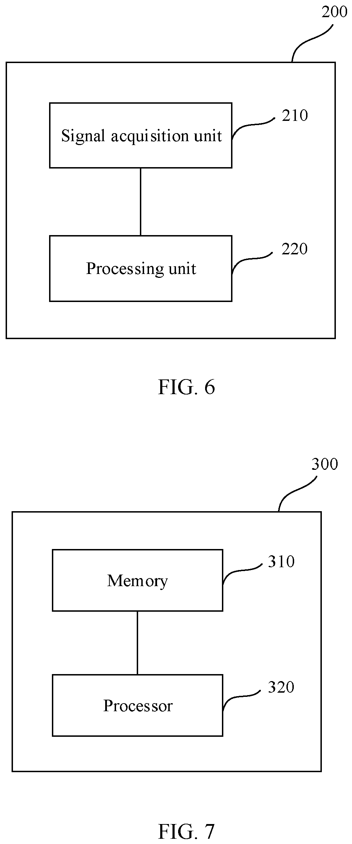

As shown in FIG. 6, this application further provides a charge apparatus 300 including a memory 310 and a processor 320, where the memory 310 stores computer instructions, and the processor 20 invokes the computer instructions to cause the charge apparatus 300 to implement the charge method according to any one of the foregoing embodiments.

This application further provides a computer-readable storage medium configured to store a computer program, where when the computer program is executed by a computing device, the computing device is caused to implement the charge method according to any one of the foregoing embodiments.

This application further provides a power apparatus including a traction battery and the charge apparatus according to any one of the foregoing embodiments, where the charge apparatus is configured to charge the traction battery.

Persons of ordinary skill in the art will appreciate that the units and algorithm steps of various examples described with reference to the embodiments disclosed in this specification can be implemented by using electronic hardware or a combination of computer software and electronic hardware. Whether the functions are executed by hardware or software depends on particular applications and design constraints of the technical solutions. Persons skilled in the art can employ a different method to implement the described functions for each particular application, but such implementations shall not be construed as going beyond the scope of this application.

It will be clearly understood by persons skilled in the art that, for ease and brevity of description, for a detailed operating process of the foregoing system, apparatus, or unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely illustrative. For example, the unit division is merely logical function division and other division manners may be used in actual implementation. For example, a plurality of units or components may be combined or integrated into another system, or some features may be ignored or may not be performed. In addition, the displayed or discussed mutual couplings or direct couplings or communication connections may be implemented by at some interfaces. The indirect couplings or communication connections between apparatuses or units may be implemented in electrical, mechanical, or other forms.

The units described as separate parts may or may not be physically separate. Parts displayed as units may or may not be physical units, meaning they may be located in one position, or may be distributed on a plurality of network units. Some or all of the units may be selected based on actual requirements to achieve the objectives of the solutions in the embodiments.

## Claims

1. A charge method, **characterized in that** the charge method comprises:
obtaining temperature of a battery; and
when the temperature of the battery is lower than a preset temperature threshold, determining to use a first charge current to charge the battery until the battery meets a preset condition, and then determining to use a second charge current to charge the battery, wherein the first charge current is used for heating the battery during charging, and the first charge current is greater than the second charge current.

2. The charge method according to claim 1, **characterized in that** the determining, when the temperature of the battery is lower than a preset temperature threshold, to use a first charge current to charge the battery comprises:
when the temperature of the battery is lower than the temperature threshold and a state of charge SOC of the battery is less than a preset SOC threshold, determining to use the first charge current to charge the battery.

3. The charge method according to claim 1 or 2, **characterized in that** the preset condition comprises that the temperature of the battery is higher than or equal to the temperature threshold and/or that the SOC of the battery is greater than or equal to the SOC threshold.

4. The charge method according to any one of claims 1 to 3, **characterized in that** the first charge current is a pulse current and the second charge current is a direct current.

5. The charge method according to claim 4, **characterized in that** the first charge current comprises only the pulse current for charging the battery.

6. The charge method according to claim 4, **characterized in that** the first charge current comprises the pulse current for alternately charging and discharging the battery.

7. The charge method according to any one of claims 4 to 6, **characterized in that** a duty cycle of the pulse current is greater than or equal to 0.01 and less than or equal to 50.

8. The charge method according to any one of claims 4 to 7, **characterized in that** a peak value of the pulse current is greater than or equal to 0.2C and less than or equal to 10C.

9. The charge method according to any one of claims 1 to 8, **characterized in that** the charge method is executed by a battery management system BMS of the battery.

10. A charge apparatus, **characterized in that** the charge apparatus comprises:
a signal acquisition unit configured to obtain temperature of a battery; and
a processing unit configured to: when the temperature of the battery is lower than a preset temperature threshold, determine to use a first charge current to charge the battery, the first charge current being used for heating the battery during charging of the battery; and when the temperature of the battery reaches the temperature threshold, determine to use a second charge current to charge the battery, the first charge current being greater than the second charge current.

11. The charge apparatus according to claim 10, **characterized in that** the processing unit is specifically configured to:
when the temperature of the battery is lower than the temperature threshold and a state of charge SOC of the battery is less than a preset SOC threshold, determine to use the first charge current to charge the battery.

12. The charge apparatus according to claim 10 or 11, **characterized in that** the preset condition comprises that the temperature of the battery is higher than or equal to the temperature threshold and/or that the SOC of the battery is greater than or equal to the SOC threshold.

13. The charge apparatus according to any one of claims 10 to 12, **characterized in that** the first charge current is a pulse current and the second charge current is a direct current.

14. The charge apparatus according to claim 13, **characterized in that** the first charge current comprises only the pulse current for charging the battery.

15. The charge apparatus according to claim 13, **characterized in that** the first charge current comprises the pulse current for alternately charging and discharging the battery.

16. The charge apparatus according to any one of claims 13 to 15, **characterized in that** a duty cycle of the pulse current is greater than or equal to 0.01 and less than or equal to 50.

17. The charge apparatus according to any one of claims 13 to 16, **characterized in that** a peak value of the pulse current is greater than or equal to 0.2C and less than or equal to 10C.

18. The charge apparatus according to any one of claims 10 to 17, **characterized in that** the charge apparatus is a battery management system BMS of the battery.

19. A charge apparatus, **characterized by** comprising a memory and a processor, wherein the memory stores computer instructions, and the processor invokes the computer instructions to cause the charge apparatus to implement the charge method according to any one of claims 1 to 9.

20. A computer-readable storage medium, **characterized by** being configured to store a computer program, wherein when the computer program is executed by a computing device, the computing device is caused to implement the charge method according to any one of claims 1 to 9.
